(19) Europäisches Patentamt
European Patent Office
Office européen des brevets

(11) Veröffentlichungsnummer: **0 192 151**
**B1**

(12) # EUROPÄISCHE PATENTSCHRIFT

(45) Veröffentlichungstag der Patentschrift: **24.10.90**

(51) Int. Cl.[5]: **C 08 F 6/00,** C 08 F 6/22, C 08 J 3/00, C 08 L 55/02

(21) Anmeldenummer: **86101655.8**

(22) Anmeldetag: **10.02.86**

(54) **Formmassen mit einheitlicher Korngrösse und verbesserter Thermostabilität.**

(30) Priorität: **20.02.85 DE 3505748**

(43) Veröffentlichungstag der Anmeldung:
**27.08.86 Patentblatt 86/35**

(45) Bekanntmachung des Hinweises auf die Patenterteilung:
**24.10.90 Patentblatt 90/43**

(84) Benannte Vertragsstaaten:
**BE DE FR GB IT NL**

(56) Entgegenhaltungen:
**EP-A-0 121 854**
**EP-A-0 121 855**

(73) Patentinhaber: **BAYER AG**
**D-5090 Leverkusen 1 Bayerwerk (DE)**

(72) Erfinder: **Eichenauer, Herbert, Dr.**
**Goethestr. 71**
**D-4047 Dormagen (DE)**
Erfinder: **Pischtschan, Alfred, Dr.**
**Zur Eiche 33**
**D-5067 Kürten (DE)**
Erfinder: **Ott, Karl-Heinz, Dr.**
**Paul Klee-Str. 54**
**D-5090 Leverkusen (DE)**

**EP 0 192 151 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Gegenstand der Erfindung sind elastisch-thermoplastische oder thermoplastische oder thermoplastische pulverförmige Formmassen mit einheitlicher Korngröße und verbesserter Thermostabilität sowie Verfahren zu ihrer Herstellung.

Wäßrige Polymerisatlatices werden üblicherweise in Polymerpulver umgewandelt durch Koagulation der Latexteilchen durch Zugabe wäßriger Salzlösungen oder verdünnter Säuren.

Dabei fallen jedoch in der Regel die koagulierten Pulver mit einem breiten Spektrum der Korngrößenverteilung an. Dadurch entstehende Nachteile sind z.B. die durch einen übermäßig hohen Feinanteil auftretende Gefahr von Staubexplosionen sowie Probleme bei Lagerung, Transport und Mischung mit anderen pulver- oder granulatförmigen Polymerisaten.

Möglichkeiten zur Reduzierung des Feinanteils sind z.B. in den US-Patentschriften 3 248 455, 3 249 569 und 3 345 430 beschrieben, wobei entweder geringe Mengen wasserlöslicher nichtionischer Polymerer, z.B. Polyethylenoxid dem Latex bei der Koagulation zugesetzt werden oder mit hochkonzentrierten Lösungen des Koagulationsmittels unter Ausbildung einer pastenförmigen Koagulatmasse gearbeitet wird.

Außer einem zu hohen Feinanteil wirkt sich auch ein zu hoher Anteil an grobkörnigem Pulver nachteilig aus, z.B. durch den Einschluß von Fällungsmittel, welches nur schwierig ausgewaschen werden kann. Als Möglichkeit zur Reduzierung des Grobkornanteils sei hier das in DAS 1 958 498 beschriebene Aufarbeitungsverfahren unter intensiver Mischung von Polymerdispersion und Fällmittel bei hoher Turbulenz genannt.

Alle diese Verfahren reduzieren nur entweder den Grobanteil oder den Feinanteil und erfordern einen relativ großen technischen Aufwand. Außerdem wird in keinem Falle gleichzeitig das thermooxidative Verhalten des resultierenden Polymerpulvers positiv beeinflußt.

Gegenstand der Erfindung ist ein Verfahren zur Herstellung elastisch-thermplastischer oder thermoplastischer pulverförmiger Formmassen mit einheitlicher Korngröße und verbesserter Thermostabilität das dadurch gekennnzeichnet ist, daß man die Formmasse in Form ihres Latex mit 0,75 bis 10 Gew.-Teilen (bezogen auf 100 Gew.-Teile Latexfeststoff), bevorzugt mit 1 bis 8 Gew.-Teilen, besonders bevorzugt mit 1,5 bis 5 Gew.-Teilen einesk in Emulsionsform vorliegenden, Schwefel enthaltenden thermoplastischen Vinylpolymerisats mit einer Vicat A/120-Erweichungstemperatur nach DIN 53460 von 30°C bis 95°C, vorzugsweise von 40°C bis 75°C und einem durch eingebaute, gegebenenfalls substitutierte Thioalkylgruppen eingebrachten Schwefelgehalt von 0,5 bis 5,0 Gew-%, vorzugsweise von 0,8 bis 3,5 Gew.-% vermischt und bei Temperaturen von 75° bis 120°C, vorzugsweise von 80° bis 100°C, gegebenenfalls unter Einwirkung von Druck durch Zusatz eines Koaguliermittels ausfällt und dann aufarbeitet.

Die erfindungsgemäßen Formmassen sind gut rieselfähige Pulver mit einer einheitlichen Korngröße ohne größere Mengen an Fein- oder Grobanteil; sie haben eine höhere Stabilität bei thermischer Belastung in Gegenwart von Luftsauerstoff.

Als schwefelhaltige thermoplastische Vinylpolymerisate, werden solche mit einer Vicat A/120-Erweichungstemperatur nach DIN 53 460 von 30°C bis 95°C eingesetzt. Bevorzugt sind dabei solche mit einer Vicat A/120-Erweichungstemperatur von 40°C bis 75°C.

Die Vicat A/120-Temperaturen werden an den Harzen nach Aufarbeitung der Emulsion durch Koagulation und anschließende Trockung gemessen.

Der Schwefelgehalt dieser Polymerisate beträgt zwischen 0,5 und 5,0 Gew.-%, vorzugsweise zwischen 0,8 und 3,5 Gew.-%, wobei der Schwefel durch eingebaute, gegebenenfalls substituierte Thioalkylgruppen eingebracht wird.

Die schwefelhaltigen Vinylpolymerisate werden in Latexform durch Emulsionspolymerisation solcher Vinylmonomerer hergestellt, die zu thermoplastischen Harzen polymerisiert werden können, z.B. Vinylaromaten der Formel I oder Verbindungen der Formel II bzw. Mischungen daraus

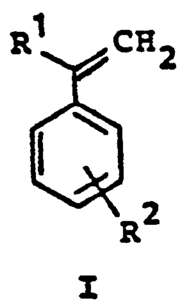

I

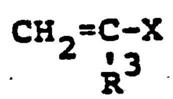

II

wobei $R^1$ Wasserstoff oder Methyl, $R^2$ Wasserstoff oder in ortho-, meta- oder para-Stellung befindliches Halogen oder Alkyl mit 1 bis 3 Kohlenstoffatomen, $R^3$ wasserstoff oder Methyl und X eine Cyano- (CN)-, Ester-($COOR^4$)- oder Amidgruppierung ($CONR^5R^6$) darstellt, und $R^4$ Wasserstoff oder Alkyl mit 1 bis 4 Kohlenstoffatomen, $R^5$ und $R^6$ Wasserstoff, Phenyl oder Alkyl mit 1 bis 4 Kohlenstoffatomen bedeuten.

Beispiele für Verbindungen der Formel I sind Styrol, -Methylstyrol, p-Methylstyrol und Vinyltoluol, Beispiele für Verbindúngen der Formel II sind Acrylnitril, Methacrylnitril, Methylacrylat und Methylmethacrylat. Weitere geeignete Monomere sinz z.B. Vinylacetat oder N-Phenylmaleinimid.

Bevorzugte Monomere sind Mischungen aus Styrol und Acrylnitril sowie aus Styrol, Acrylnitril und Methylmethacrylat.

Diese Monomeren werden in Gegenwart einer oder mehrerer mercaptogruppenhaltiger Verbindungen polymerisiert. Geeignet sind beispielsweise Alkylmercaptane mit 1 bis 18 C-Atomen, Mercaptocarbonsäuren und deren Ester mit $C_1$—$C_6$-Alkoholen, Mercaptoalkohole mit 2 bis 12 C-Atomen, oder Arylalkylmercaptane mit 10 bis 20 C-Atomen.

Die menge dieser Monomeren wird so gewählt, daß eine Vicat A/120-Erweichungstemperatur im angegebenen Bereich erzielt wird.

Bevorzugte Mercaptane sind tert.-Dodecylmercaptan und n-Dodecylmercaptan bzw. deren Gemische, bevorzugte, unter Mercaptan-Zusatz hergestellte thermoplastische Emulsionspolymerisate sind Reaktionsprodukte aus

a) 50—80 Gew.-Teilen Styrol und/oder α-Methylstyrol
b) 10—30 Gew.-Teilen Acrylnitril
c) 7,5—25 Gew.-Teilen tert.-Dodecylmercaptan.

Die Emulsionspolymerisation wird unter Verwendung anionischer Emulgatoren wie z.B. Natrium-, Kalium- oder Ammoniumsalze langkettiger Fettsäuren mit 10 bis 20 C-Atomen, z.B. Kaliumoleat, Alkylsulfate mit 10 bis 20 C-Atomen, Alkylarylsulfonate mit bis 20 C-Atomen oder Alkali- bzw. Ammoniumsalze der disproportionierten Abietinsäure durchgeführt.

Geeignete radikalbildende Initiatoren sind organische und anorganische Peroxide, anorganische Persulfate wie z.B. Kaliumpersulfat, Azoinitiatoren wie z.B. Azobisisonutyronitril, sowie Redox-Systeme, die aus einem Oxidationsmittel, vorzugsweise einem Peroxid, und einem Reduktionsmittel bestehen. Die Polymerisation kann bei Temperaturen von 30° bis 100°C, vorzugsweise von 50° bis 80°C durchegeführt werden. Als bevorzugter Initiator wird Kaliumpersulfat eingesetzt.

Den in Form ihrer Latices vorliegenden elastischthermoplastischen oder thermoplastischen Formmassen wird die Emulsion des schwefelhaltigen Vinylpolymerisats zugesetzt in Mengen entsprechend 0,75 bis 10 Gew.-%, bevorzugt 1 bis 8 Gew.-% und besonders bevorzugt 1,5 bis 5 Gew.-% schwefelhaltigen Vinylpolymer bezogen auf Formmasse (im Latex), bei 10° bis 80°C, vorzugsweise bei ca. 20°C.

Erfindungsgemäß können alle als wäßrige Emulsion vorliegenden elastisch-thermoplastischen oder thermoplastischen Polymerisate durch Mischen mit den Emulsionen schwefelhaltiger thermoplastischer Vinylpolymerisate in pulverförmige Formmassen mit einheitlicher Korngröße und verbesserter thermischer Stabilität in Gegenwart von Luft überführt werden.

Beispiele für geeignete Polymere in Latexform sind Polystyrol, Co- und Terpolymerisate des gegebenenfalls kern- oder seitenkettensubstituierten Styrols mit anderen harzbildenden Monomeren wie (Meth)Acrylnitril, (Meth)Acrylsäuremethylester, α-Methylstyrol, p-Methylstyrol, Vinyltoluol, sowie anderen kern- oder seitenkettensubtituierten Styrolen, N(Cyclo)-Alkylmaleinimide, N(Alkyl)-Phenylmaleinimiden, z.B. Styrol/Acrylnitril-Copolymerisate, Styrol/Methylmethacrylat-Copolymerisate oder α-Methylstyrol/Acrylnitril-Copolymerisate sowie die durch Polymerisation von harzbildenden ungesättigten Verbindungen in Gegenwart einer kautschukelastischen Komponente, beispielsweise Polybutadien, Polyisopren oder Acrylatkautschuk hergestellten elastisch-thermoplastischen Polymerisate.

Bevorzugt sind Latex-Gemische aus einem Latex eines elastisch-thermoplastischen Polymeren, z.B. dem Pfropfprodukt eines harzbildenden Monomeren (Styrol, α-Methylstyrol, p-Methylstyrol, (Meth)Acrylnitril, (Meth)Acrylsäuremethylester oder deren Gemische), auf Polybutadien oder Copolymerisate von Butadien mit Acrylnitril und/oder Styrol und einem Latex eines harten und spröden Harzes, beispielsweise einem Styrol- oder α-Methylstyrol- oder p-Methylstyrol-Acrylnitril-Copolymerisat.

Besonders bevorzugt sind Latices von ABS-Polymerisaten der folgenden Zusammensetzung:

(A) 5 bis 100 Gew.-%, vorzugsweise 5 bis 80 Gew.-%, eines Pfropfmischpolymerisats, hergestellt durch Pfropfpolymerisation von

- I) 10 bis 95 Gew.-%, vorzugsweise 10 bis 80 Gew.-%, einer Mischung aus
  - a) 50 bis 90 Gew.-% Styrol, Alkylstyrol, Methylmethacrylat oder Mischungen daraus,
  - b) 50 bis 10 Gew.-% Acrylnitril, Alkylacrylnitril, Alkylmethacrylat oder Mischungen daraus auf
- II) 90 bis 5 Gew.-%, vorzugsweise 90 bis 20 Gew.-%, eines Polymerisats eines konjugierten Diolefins mit einem Anteil von mindestens 80 Gew.-% einpolymerisiertem konjugiertem Diolefin und

(B) 95 bis 0 Gew.-%, vorzugsweise 95 bis 20 Gew.-%, eines thermoplastischen Mischpolymerisats aus

- a) 50 bis 95 Gew.-% Styrol, Alkylstyrol, Methylmethacrylat oder Mischungen daraus,
- b) 50 bis 5 Gew.-% Acrylnitril, Alkylacrylnitril, Alkylmethacrylat oder Mischungen daraus, wobei die Summe der harzbildenden Monomeren a) und b) in den Komponenten (A) und (B) zusammen 40 Gew.% nicht unterschreitet.

Erfindungsgemäße pulverförmige ABS-Formmassen können hergestellt werden:

1.) durch Mischen der Emulsionen eines Pfropfpolymerisats (A) und eines Copolymerisats (B) mit einer Emulsion des schwefelhaltigen Vinylpolymerisats und gemeinsame Fällung Aufarbeitung

oder

2.) durch Pfropfpolymerisieren der gesamten harzbildenden Monomeren auf den Dienkautschuk in Emulsion, Zufügen einer emulsion des schwefelhaltigen Vinylpolymerisats und gemeinsamer Fällung und Aufarbeitung.

Vor der Koagulation können Dispersionen von Antioxidantien zugesetzt werden.

Für diese Methode geeignete Emulgatoren — sie müssen eine Kaogulation zulassen — sind z.B.:

Natrium-, Kalium- oder Ammoniumsalze langkettiger Fettsäuren mit 10 bis 22 C-Atomen, Alkylsulfate mit 10 bis 20 C-Atomen, Alkylarylsulfonate mit 10 bis 20 C-Atomen sowie die Alkali- und Ammoniumsalze der disproportionierten Abietinsäure.

Die Art der Koagulationsmittel richtet sich nach den eingesetzten Emulgatoren. Im sauren wie im alkalischen Bereich emulgierende Mittel (Alkylsulfate, Alkylarylsulfonate sowie Alkylsulfonate) erfordern Elektrolyte, z.B. Calciumchlorid, Magnesiumsulfat oder Aluminiumsulfat in Form ihrer wäßrigen Lösungen als Fällmittel. Bei Emulgatoren, die bei pH-Werten unterhalb 7 keine Emulgierwirkung mehr besitzen genügen Säuren, z.B. Essigsäure, zur Koagulation.

Wenn als Fällmittel eine wäßrige Lösung benutzt wird, liegt ihre Konzentration bevorzugt zwischen 0,5 und 25% füe Elektrolyte und zwischen 0,5 und 90% für Säuren. Kurzkettige Carbonsäuren, z.B. Essigsäure, können auch in reiner Form angewendet werden.

Die Menge an Fällmittel ist bevorzugt 0,01 bis 20% des Festpolymerisats.

Die koagulierten Formmassen können nach bekannten Verfahren, insbesondere durch Filtration oder Abzentrifugieren und anschließendes Trocknen aufgearbeitet werden.

## Beispiele

Ind den folgenden Beispielen sind Teile immer Gewichtsteile und beziehen sich immer auf Feststoff im Latex oder auf polymerisierbare Bestandteile.

### Beispiel 1

Herstellung eines in Emulsionsform vorliegenden Reaktionsproduktes aus Styrol, Acrylnitril und tert.-Dodecylmercaptan.

3,06 Teile Styrol, 1,19 Teil Acrylnitril und 0,75 Teile tert.-Dodecylmercaptan werden unter Stickstoff zusammen mit 0,08 Teilen des Natriumsalzes der disproportionierten Abietinsäure in 68 Teilen Wasser emulgiert, wonach 0,3 Teile Kaliumpersulfat (gelöst in 24 Teilen Wasser) zugegeben werden und die Mischung auf 65°C erwärmt wird. Danach werden im Laufe von 4h eine Mischung aus 58,14 Teilen Styrol, 22,61 Teilen Acrylnitril und 14,25 Teilen tert.-Dodecylmercaptan sowie eine Lösung von 1,92 Teilen des Natriumsalzes der disproportionierten Abietinsäure in 25 Teilen Wasser zudosiert, wobei die Reaktionstemperatur von 65°C beibehalten wird. Nach einer Nachreaktionszeit wird ein Teil des Latex in einer kalten Magnesiumsulfat/Essigsäure-Lösung koaguliert. Das nach Trocknung bei 70°C im Vakuum erhaltene Polymerisat besitzt einen Schwefelgehalt von 2,3% und eine Vicat A/120-Erweichungstemperatur von 62°C (gemessen an einem Probekörper mit den Abmessungen 10 mm × 10 mm × 4 mm).

### Beispiel 2

Herstellung eines im Emulsionsform vorliegenden Reaktionsproduktes aus Styrol, Acrylnitril und Mercaptoessigsäureethylester:

3,24 Teile Styrol, 1.26 Teile Acrylnitril und 0,5 Teile Mercaptoessigsäureethylester werden in einer Stickstoffatmosphäre unter Zusatz von 0,08 Teilen des Natriumsalzes der n-Dodecylbenzosulfonsäure in 67 Teilen Wasser emulgiert, wonach 0,3 Teile Kaliumpersulfat (gelöst in 28 Teilen Wasser) zugegeben werden und das Gemisch auf 65°C erwärmt wird. Anschließend werden innerhalb von 4h eine Mischung aus 61,56 Teilen Styrol, 23,94 Teilen Acrylnitril und 9,5 Teilen Mercaptoessigsäureethylester sowie eine Lösung von 1,92 Teilen des Natriumsalzes der n-Dodecylbenzosulfonsäure (gelöst in 25 Teilen Wasser) kontinuierlich zudosiert, wobei die Reaktionstemperatur von 65°C beibehalten wird. Nach einer Nachreaktionszeit wird ein Teil des Latex in einer kalten Magnesiumsulfat/Essigsäure-Lösung koaguliert, wonach des Polymerprodukt bei 70°C im Vakuum getrocknet wird.

Das Polymerisat besitzt einen Schwefelgehalt von 2,65% und eine Vicat A/120-Erweichungstemperatur von 57°C (gemessen an einem Probekörper mit den Abmessungen 10 mm × 10 mm × 4 mm).

### Beispiel 3

Herstellung eines in Emulsionsform vorliegenden Reaktionsproduktes aus Styrol, Acrylnitril und 3-Mercaptopropionsäuremethylester:

3,24 Teile Styrol, 1,26 Teile Acrylnitril und 0,5 Teile 3-Mercaptopropionsäuremethylester werden in einer Stickstoffatmosphäre unter Verwendung von 0,08 Teilen des Natriumsalzes der n-Dodecylbenzosulfonsäure als Emulgator in 67 Teilen Wasser emulgiert, wonach 0,3 Teile Kaliumpersulfat (gelöst in 24 Teilen Wasser) zugegeben und das Gemisch auf 65°C erwärmt wird. Danach werden im Laufe von 4h eine Mischung aus 61,56 Teilen Styrol, 23,94 Teilen Acrylnitril und 9,5 Teilen 3-Mercaptopropionsäure-methylester sowie eine Lösung von 1,92 Teilen des Natriumsalzes der n-Dodecylbenzolsulfonsäure (gelöst in 25 Teilen Wasser) kontinuierlich zudosiert, wobei die Reaktionstemperatur bei 65°C gehalten wird. Nach einer Nachreaktionszeit wird ein Teil des Latex in einer kalten Magnesiumsulfat/Essigsäure-Lösung koaguliert. Das nach Trocknung bei 70°C im Vakuum erhaltene Polymerisat besitzt einen Schwefelgehalt von 2,6% und eine Vicat A/120-Erweichungstemperatur von 53°C (gemessen an einem Probekörper mit den Abmessungen 10 mm × 10 mm × 4 mm).

Beispiele 4 bis 13

Herstellung elastisch-thermoplastischer pulverförmiger Formmassen.

Jeweils 900 g eines 33%igen Pfropfpolymerisatlatex von 36 Teilen Styrol und 14 Teilen Acrylnitril auf 50 Teile Polybutadien, bei dessen Herstellung 1,5 Teile des Natriumsalzes der disproportionierten Abietinsäure als Emulgator verwendet wurden, werden nach der Zugabe von 1,2 Teilen Antioxidans (bezogen auf 100 Teile Polymerfeststoff) mit den in Tabelle 1 angegebenen Mengen des Latex aus Beispiel 1 vermischt, wonach das Latexgemisch in einem Fällkessel mit Propellerrührer zu einer Lösung von 32 g Magnesiumsulfat ($MgSO_4 \cdot 7H_2O$) und 16 g Essigsäure in 1,6 l entsalztem Wasser dosiert wird.

Die Mischung wird auf 98°C erwärmt, wobei vollständige Koagulation eintritt. Nach Filtration des Fällgemisches wird das Polymerisat bei 70°C im Vakuum getrocknet und der Anteil der Korngrößenfraktion durch Siebanalyse ermittel (siehe Tabelle 1).

Benutzt wurde eine Prüfsiebmaschine mit Vibrationssieben (Hersteller Haver u. Boecker), die Prüfsiebe waren nach DIN 4188 genormt.

Tabelle 1 Korngrößenverteilung elastisch-thermoplastischer pulverförmiger Formmassen

| Beispiel | Eingesetzte Menge Latex aus Beispiel 1 /Gew.-Teile Latexfeststoff (Latex Bsp. 1) pro 100 Gew.-Teile zu koagulierender Latexfeststoff/ | Korngrößenverteilung /%/ >1 mm | 1 bis 0,1 mm | <0,1 mm |
|---|---|---|---|---|
| 4 (nicht erfindungsgemäß) | - | 84,06 | 15,86 | 0,08 |
| 5 (nicht erfindungsgemäß) | 0,5 | 80,69 | 18,91 | 0,40 |
| 6 | 1 | 11,69 | 82,08 | 6,23 |
| 7 | 2,5 | 7,24 | 86,35 | 6,41 |
| 8 | 5 | 6,97 | 90,16 | 2,87 |
| 9 | 7,5 | 5,91 | 91,74 | 2,35 |
| 10 | 10 | 25,24 | 71,86 | 2,90 |
| 11 (nicht erfindungsgemäß) | 20 | 34,08 | 59,89 | 6,03 |
| 12 (nicht erfindungsgemäß) | 30 | 51,66 | 47,35 | 0,99 |
| 13 (nicht erfindungsgemäß) | 40 | 46,43 | 52,95 | 0,62 |

Beispiele 14

Herstellung einer erfindungsgemäßen elastisch-thermoplastischen pulverförmigen Formmasse.

900 g des in den Beispielen 4 bis 13 beschriebenen Pfropfpolymerisatlatex werden ohne vorhergehende Antioxidans-Zugabe mit 20 g des Latex aus Beispiel 1 vermischt, wonach des Latexgemisch wie unter Beispiel 4 bis 13 beschrieben koaguliert und in trockenes Polymerpulver überführt wird. Das Pulver mit einer Korngröße von 1 bis 0,1 mm wird durch DSC-Messungen unter Verwendung eines DSC-2-Meßgerätes der Firma Perkin-Elmer auf seine Thermostabilität untersucht:

Isotherme Messung bei 160°C (Spülgas Sauerstoff 3,6 l/h): Induktionszeit bis zur maximalen Oxidationsrate = 12,3 min.

Dynamische Messung (Spülgas Sauerstoff 3,6 l/h, Heizrate 20 K/min): Maximum der exothermen Reaktion bei T = 203°C.

Beispiel 15

Herstellung einer nichterfindungsgemäßen elastisch-thermoplastischen pulverförmigen Formmasse

900 g des in den Beispielen 4 bis 13 beschrieben Pfropfpolymerisatlatex werden ohne vorhergehende Antioxidans-Zugabe und ohne Zusatz des Latex aus Beispiel 1 wie unter den Beispielen 4 bis 13 beschrieben koaguliert und in trockenes Polymerpulver überführt. Das Pulver mit einer Korngröße von 1 bis 0,1 mm wird durch DSC-Messungen unter Verwendung eines DSC-2-Meßgerätes der Firma Perkin-Elmer auf seine Thermostabilität untersucht:

Isotherme Messung bei 160°C (Spülgas Sauerstoff 3,6 l/h): Induktionszeit bis zur maximalen Oxidationsrate = 2,7 min.

Dynamische Messung (Spülgas Sauerstoff 3,6 l/h, Heizrate 20 K/min): Maximum der exothermen Reaktion bei T = 185°C.

Beispiel 16

Herstellung einer erfindungsgemäßen Mischung aus elastisch-thermoplastischer und thermoplastischer pulverförmiger Formmasse

Ein Gemisch aus 363 g eines 33%igen Pfropfpolymerisatlatex von 36 Teilen Styrol und 14 Teilen Acrylnitril auf 50 Teile Polybutadien, bei dessen Herstellung 1,5 Teile des Natriumsalzes der disproportionierten Abietinsäure als Emulgator verwendet wurden, und 400 g eines 45%igen Styrol-Acrylnitril-Copolymerisatlatex, hergestellt durch Copolymerisation von 72 Teilen Styrol und 28 Teilen Acrylnitril unter Verwendung von 2,0 Teilen des Natriumsalzes der disproportionierten Abietinsäure als Emulgator, wird nach der Zugabe von 1,2 Teilen Antioxidans (bezogen auf 100 Teile Polymerfeststoff) mit 50 g des Latex aus Beispiel 1 vermischt, wonach das Latexgemisch in einem Fällkessel mit Propellerrührer zu einer Lösung von 32 g Magnesiumsulfat ($MgSO_4 \cdot 7H_2O$) und 16 g Essigsäure in 1,6 l entsalztem Wasser dosiert wird. Die Mischung wird auf 98—100°C erwärmt, wobei vollständige Koagulation eintritt. Nach Filtration des Fällgemisches wird das Polymerisat bei 70°C im Vakuum getrocknet und die Korngrößenverteilung durch Siebanalyse bestimmt.

Verteilung der Korngröße:

| | |
|---|---|
| Bereich >1 mm: | 1,59% |
| Bereich 1 bis 0,1 mm: | 92,26% |
| Bereich <0,1 mm: | 6,15% |

Beispiel 17

Herstellung einer nicht-erfindungsgemäßen Mischung aus elastisch-thermoplastischer und thermoplastischer pulverförmigen Formmasse.

Das in Beispiel 16 beschriebene Gemisch aus Pfropfpolymerisatlatex und Styrol-Acrylnitrol-Copolymerlatex wird ohne Zusatz des Latex aus Beispiel 1 in einem Fällkessel mit Propellerrührer zu einer Lösung von 30 g Magnesiumsulfat ($MgSO_4 \cdot 7H_2O$) und 15 g Essigsäure in 1,6 l entsalztem Wasser dosiert, wonach die Mischung bei 98°—100°C koaguliert wird. Nach Filtration des Fällgemisches wird das Polymerisat bei 70°C im Vakuum getrocknet und die Korngrößenverteilung durch Siebanalyse ermittelt:

Verteilung der Korngröße:

| | |
|---|---|
| Bereich >1 mm: | 74,77% |
| Bereich 1 bis 0,1 mm: | 23,50% |
| Bereich <0,1 mm: | 1,73% |

**Patentansprüche**

1. Verfahren zur Herstellung elastisch-thermoplastischer oder thermoplastischer pulverförmige Formmassen, dadurch gekennzeichnet, daß die Formmassen in Form ihres Latex mit 0,75 bis 10 Gew.-Teilen (bezogen auf 100 Gew.-Teile Latexfeststoff) eines in Emulsionsform vorliegenden schwefelhaltigen thermoplastischen Vinylpolymerisats mit einer Vicat A/120-Erweichungstemperatur nach DIN 53 460 von 30°C bis 95°C und einem durch eingebaute, gegebenenfalls substituierte Thioalkylgruppen eingebrachten Schwefelgehalt von 0,5 bis 5,0 Gew.-% vermischt und bei Temperaturen von 75°C bis 120°C,

gegebenenfalls unter Einwirkung von Druck, durch Zusatz eines Koaguliermittels ausfällt und dann aufarbeitet.

2. Verfahren nach Anspruch 1, dadurch gekennzeichnet, daß man 1—8 Gew.-Teile des schwefelhaltigen Vinylpolymerisats mit einem Schwefelgehalt von 0,8 bis 3,5 Gew.-% verwendet.

3. Verfahren nach Anspruch 1, dadurch gekennzeichnet, daß als schwefelhaltiges thermoplastisches Vinylpolymerisat ein Reaktionsprodukt von Styrol, α-Methylstyrol, p-Methylstyrol, Vinyltoluol, (Meth)Acrylnitril, Methyl(meth)acrylat, N-Phenylmaleinimid oder Mischungen daraus und einer Mercaptogruppen-haltigen Verbindung eingesetzt wird.

4. Verfahren nach Anspruch 1, dadurch gekennzeichnet, daß als schwefelhaltiges thermoplastisches Vinylpolymerisat ein Reaktionsprodukt von

a) 50—80 Gew.-Teilen Styrol und/oder α-Methylstyrol
b) 10—30 Gew.-Teilen Acrylnitril und
c) 7,5—25 Gew.-Teilen tert. Dodecylmercaptan.

eingesetzt wird.

5. Elastisch-thermoplastische oder thermoplastische pulverförmige Formmassen, erhältlich nach dem Verfahren des Anspruch 1.

**Revendications**

1. Procédé pour la fabrication de matières à mouler élastiques-thermoplastiques ou thermoplastiques en poudre, caractérisé en ce que l'on mélange les matières à mouler sous forme de leur latex avec 0,75 à 10 parties en poids (pour 100 parties en poids de solides du latex) d'un polymère vinylique thermoplastique soufré sous forme d'émulsion, ayant une température de remollissement Vicat A/120 selon la norme DIN 53 460 de 30 à 95°C et une teneur en soufre, introduit par les groupes thioalkyles éventuellement substitués incorporés, de 0,5 à 5,0% en poids et on les précipite par addition d'un agent coagulant à des températures de 75 à 120°C, éventuellement sous l'action de la pression et ensuite on la transforme.

2. Procédé selon la revendication 1, caractérisé en ce que l'on utilise 1 à 8 parties en poids du polymère vinylique soufré d'une teneur en soufre de 0,8 à 3,5% en poids.

3. Procédé selon la revendication 1, caractérisé en ce que l'on utilise comme polymère vinylique thermoplastique soufré un produit de réaction du styrène, de l'α-méthylstyrène, du p-méthylstyrène, du vinyltoluène, du (méthyl)acrylonitrile, du (méth)acrylate de méthyle du N-phénylmaléimide ou leurs mélanges et d'un composé à groupes mercapto.

4. Procédé selon la revendication 1, caractérisé en ce que l'on utilise comme polymère vinylique thermoplastique soufré un produit de réaction de

a) 50—80 parties en poids de styrène et/ou d'α-méthylstyrene
b) 10—30 parties en poids d'acrylonitrile et
c) 7,5—25 parties en poids de tert.-dodécylmercaptan.

5. Matières à mouler élastiques-thermoplastiques ou thermoplastiques en poudre, accessibles par le procédé selon la revendication 1.

**Claims**

1. A process for the production of elastic-thermoplastic or thermoplastic powder-form moulding compounds, characterized in that the moulding compounds present in the form of a latex are mixed with from 0.75 to 10 parts by weight (based on 100 parts by weight of latex solids) of a sulfur-containing thermoplastic vinyl polymer present in emulsion form having a Vicat A/120-softening temperature according to DIN 53 460 of from 30°C to 95°C and a sulfur content introduced by incorporated, optionally substituted thioalkyl groups of from 0.5 to 5.0% by weight and are then precipitated by the addition of a coagulant at temperatures of from 75 to 120°C, optionally under pressure, followed by working up.

2. A process as claimed in claim 1, characterized in that 1 to 8 parts by weight of the sulfur-containing vinyl polymer containing 0.8 to 3.5% by weight sulfur are used.

3. A process as claimed in claim 1, characterized in that a reaction product of styrene, α-methyl styrene, p-methyl styrene, vinyl toluene, (meth)acrylonitrile, methyl (meth)acrylate, N-phenyl maleic imide or mixtures thereof and a compound containing mercapto groups is used as the sulfur-containing thermoplastic vinyl polymer.

4. A process as claimed in claim 1, characterized in that a reaction product of

a) 50 to 80 parts by weight of styrene and/or α-methyl styrene,
b) 10 to 30 parts by weight of acrylonitrile and
c) 7.5 to 25 parts by weight of tert.-dodecyl mercaptan

is used as the sulfur-containing thermoplastic vinyl polymer.

5. Elastic-thermoplastic or thermoplastic powder-form moulding compounds obtainable by the process claimed in claim 1.